# EUROPÄISCHE PATENTSCHRIFT

(11) **EP 1 062 016 B1**
(45) Veröffentlichungstag und Bekanntmachung des Hinweises auf die Patenterteilung: **11.12.2002**
(21) Anmeldenummer: 99906146.8
(22) Anmeldetag: 18.01.1999
(51) Int. Cl.: B01D 46/02

(54) **TASCHENFILTER**
POCKET FILTER
FILTRE EN FORME DE POCHE

(30) Priorität: 23.01.1998 DE 29801086 U
(43) Veröffentlichungstag der Anmeldung: 27.12.2000
(73) Patentinhaber: CAMFIL KG., 23858 Reinfeld (DE)
(72) Erfinder: LANGE, Michael, D-23858 Reinfeld (DE); WESTPHAL, Uwe, D-23560 Lübeck (DE)
(74) Vertreter: Sobisch, Peter, Dipl.-Ing.
(86) Internationale Anmeldenummer: EP9900257
(87) Internationale Veröffentlichungsnummer: WO99037384

(56) Entgegenhaltungen:
- EP-A- 0 663 228
- DE-C- 4 443 144
- US-A- 4 808 203

## Beschreibung

Die Erfindung betrifft ein Taschenfilter nach dem Oberbegriff des Anspruchs 1.

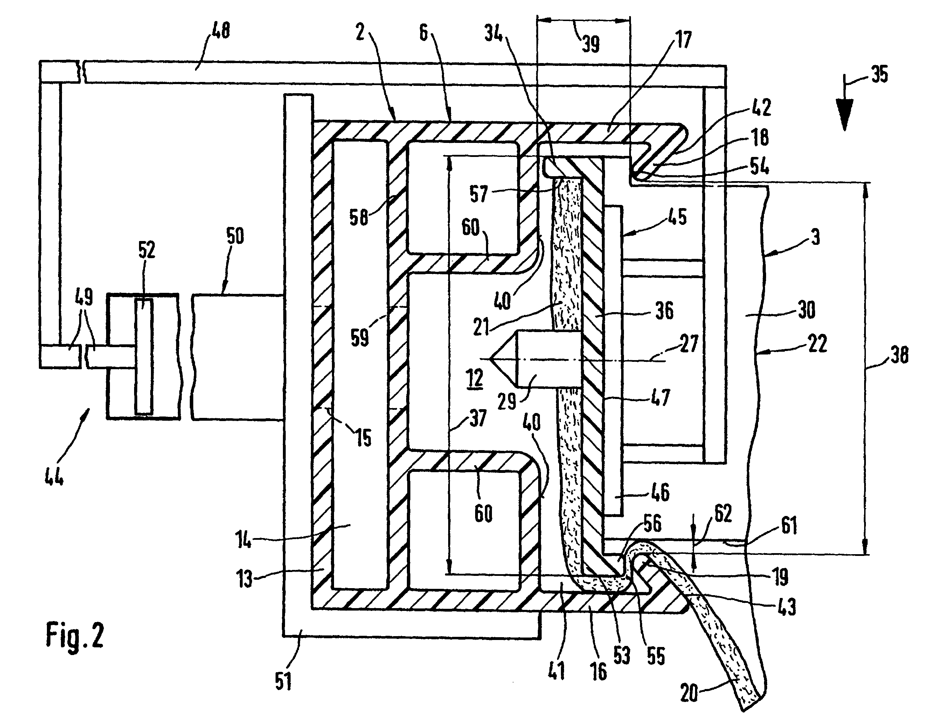

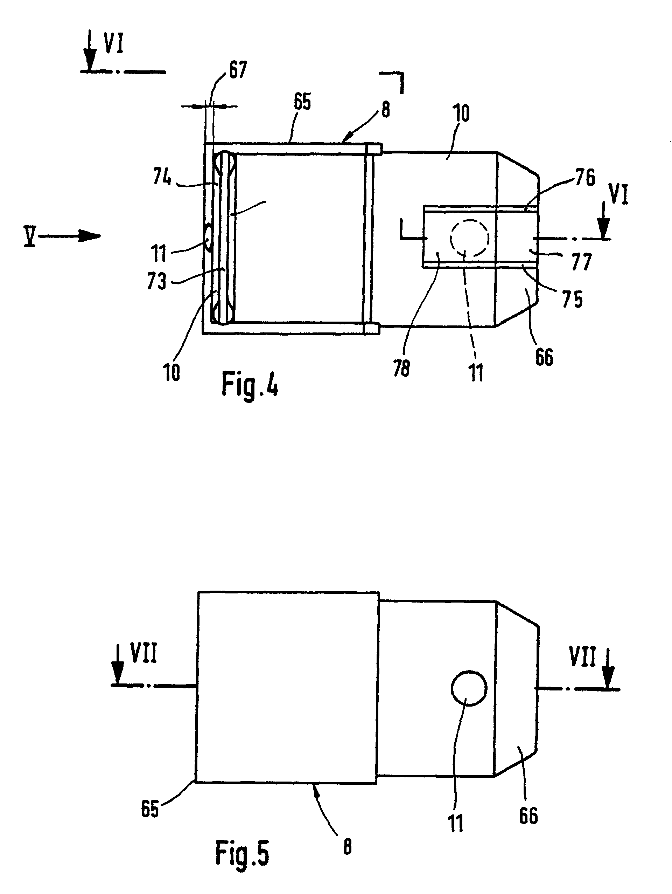

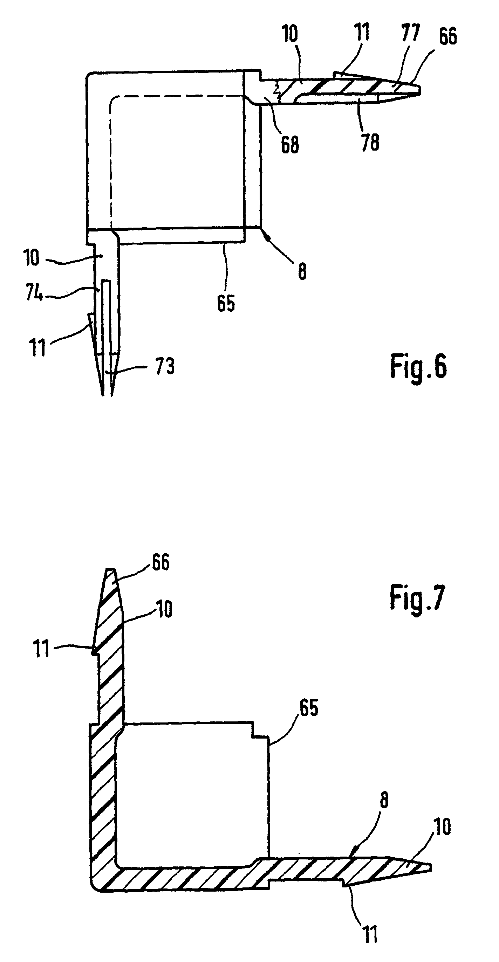

Bei einem bekannten Taschenfilter dieser Art (DE 44 43 144 C1) ist ein Kunststoff-Außenrahmen verwendet, dessen Profile einen U-förmigen, nach innen offenen Querschnitt aufweisen (Fig. 2). Am freien Ende der Schenkel dieses Querschnitts erstreckt sich jeweils ein Steg rechtwinklig nach innen. Der lichte Abstand zwischen den Stegen ist kleiner als die Höhe der Profile eines Kunststoff-Innenrahmens. Jedes dieser Profile wird um seine Längsachse elastisch verdreht, bevor es mit dem freien Taschenrand in den Innenraum des Profils des Außenrahmens manipuliert werden kann. Dazu muß der Verformungswiderstand der Längs- und Stirnprofile jedes Innenrahmens durch endseitige Ausklinkungen (Fig. 5) herabgesetzt werden, was sich nachteilig auf die Steifigkeit des Innenrahmens auswirkt. Längsprofile des Innenrahmens sind mit Löchern und dazu komplementären, nach außen ragenden Vorsprüngen versehen (Fig. 5). Jeder Vorsprung durchdringt zwei Taschenränder und ein fluchtendes Loch im benachbarten Innenrahmen und wird schließlich zu einem Nietkopf verschmolzen (Fig. 6). Zwischen den Längsprofilen und zwischen benachbarten Vorsprüngen und Löchern jedes Längsprofils sind an jedem Innenrahmen Querwände (Fig. 5) angeordnet. Nachteilig sind die geringe Steifigkeit des Innenrahmens und der hohe Montageaufwand. Der Außenrahmen kann u.a. durch Einfügen eines Einsteck-Eckverbinders geschlossen werden.

Aus der US 4 300 927 A ist es an sich bekannt. den Außenrahmen einstückig und rostartig mit einer länglichen Durchbrechung für jede Filtertasche auszubilden. Jeder Innenrahmen ist trichterförmig und wird einlaßseitig durch eine Zahnung mit einem Innenrand des Außenrahmens verrastet. Ein zusätzlicher Klemmring drückt den freien Rand der Filtertasche an die Außenfläche des Innenrahmens.

Die US 4 312 648 A zeigt als an sich bekannt einen einstückigen Außenrahmen, auf den Außenflansche trichterförmiger Innenrahmen überlappend abgelegt werden. Ein zusätzlicher Klemmring entsprechend US 4 300 927 A ist auch hier erforderlich.

Aus der US 5 298 044 A sind einstückige Innenrahmen aus Kunststoff mit Querwänden zwischen den Längsprofilen an sich bekannt. Die Querwände begrenzen seitlich Durchlässe, in deren Längsmitte in dem einen Längsprofil jeweils ein Vorsprung und in dem anderen Längsprofil jeweils ein Loch angeordnet sind. Der freie Rand jeweils zweier Filtertaschen wird zwischen benachbarten Innenrahmen und deren Vorsprung/Loch-Paarungen eingeklemmt. Jeder Innenrahmen stützt sich mit einem durchgehenden Längsflansch in einer durchgehenden Längsnut des benachbarten Innenrahmens ab. Die Stirnprofile der Innenrahmen sind mit Vorsprüngen und den freien Rändern der Filtertaschen in einem Außenrahmen von U-förmigem Querschnitt gehalten.

Aus der DE 87 16 251 U1 ist es an sich bekannt, den Außenrahmen aus einem Blechstreifen mit randseitigen Einschnitten zu biegen. Dabei werden an den Ecken des Außenrahmens Überlappungsbereiche mit gekröpften Blechabschnitten erzeugt, um eine möglichst ebene äußere Stirnfläche des Außenrahmens zu erzielen. Der Außenrahmen hat schließlich einen U-förmigen Querschnitt.

Bei einem an sich bekannten Taschenfilter (DE 93 00 732 U1) haben alle Profile des Außenrahmens einen rein U-förmigen, nach innen offenen Querschnitt, in den ebenfalls mit U-förmigem Querschnitt ausgebildete Fortsätze der Eckverbinder eingeklebt sind. Der Rand der Filtertaschen kann in dem Innenraum der Profile des Außenrahmens mit einem Dichtungsband aus PU-Schaum oder Moosgummi dicht festgehalten werden.

Diese Bauart ist insbesondere bei höheren Differenzdrücken und größeren Abmessungen der Filtertaschen nicht stabil genug. Die Halterung und Abdichtung der Filtertaschen im Außenrahmen sind unsicher.

Aus der US 4 356 011 A ist es an sich bekannt, alle Profile des Außenrahmens mit U-förmigem, nach innen offenem Querschnitt auszubilden. In den Innenraum ragt von etwa der Hälfte jedes Schenkels eine Anschlagleiste, die beim Schließen des Außenrahmens an den freien Rand der Filtertasche angelegt werden. Dieser freie Rand ist dabei zusammen mit einem Stab des Innenrahmens in den Außenrahmen eingetaucht. Längsstäbe benachbarter Innenrahmen mit dazwischen eingespannten Taschenrändern sind durch Niete aneinander befestigt.

Der Erfindung liegt die Aufgabe zugrunde, den Innenrahmen stabiler zu gestalten und die Montage der Filterelemente in den Außenrahmen zu vereinfachen und zu verbessern.

Diese Aufgabe ist durch die Merkmale des Anspruchs 1 gelöst. Das Taschenfilter ist insbesondere zur Filterung von Luft und anderen Gasen bestimmt. Alle Profile des Außenrahmens sind vorzugsweise aus Kunststoff stranggepreßt, zum Beispiel aus hochschlagzähem Polystyrol oder anderen veraschbaren Kunststoffen. Der Innenrahmen läßt sich leicht herstellen und formschlüssig mit dem freien Rand der zugehörigen Filtertasche verbinden. Die Querwände bilden eine willkommene Versteifung des Innenrahmens und definieren außerdem Wirklinien für die Montagekräfte, die zur Montage der Filterelemente in den Außenrahmen aufgewandt werden müssen. Dadurch ist auch das Durchdringen der Vorsprünge durch den freien Rand der Filtertasche erleichtert. Zusätzlich können die Vorsprünge jeweils an ihrem freien Ende zugespitzt sein. Durch die Passung von Vorsprung und Loch ergibt sich eine zusätzliche Versteifung des Verbandes benachbarter Filterelemente gegenüber einander. Die Löcher und Vorsprünge haben vorzugsweise gleichen Abstand voneinander.

Die Innenrahmen gemäß Anspruch 2 lassen sich besonders preisgünstig und stabil herstellen.

Gemäß Anspruch 3 ergibt sich der Vorteil, daß man mit den beiden Innenrahmenteilen unterschiedliche Gesamtbreiten der Innenrahmen nach Bedarf herstellen kann. Die Befestigung der einander überlappenden Querwände und Stirnprofile kann zum Beispiel mit Heftklammern, durch Kleben oder durch Verschweißen stattfinden.

Die Ausbildung und Verzahnung der Außenflanschabschnitte des einen Innenrahmens mit Ausnehmungen des benachbarten Innenrahmens gemäß Anspruch 4 führen zu einer weiteren Versteifung des Verbandes benachbarter Filterelemente miteinander.

Diesem Zweck dienen auch die Merkmale des Anspruchs 5.

Gemäß Anspruch 6 erhält man eine definierte Positionierung der Filtertasche relativ zu dem zugehörigen Innenrahmen, bevor die Vorsprünge des Innenrahmens den freien Rand der Filtertasche formschlüssig durchdringen.

Der Innenflansch gemäß Anspruch 7 erhöht zum einen die Steifigkeit des Innenrahmens und führt zum anderen zu erwünschter Verwirbelung des durchströmenden, zu reinigenden Mediums. Auf diese Weise wird einer Erosion der Filtertasche stromabwärts von dem Innenrahmen vorgebeugt.

Die Halterippen gemäß Anspruch 8 sind widerhakenähnlich und wirken besonders gut mit den Filterelementen zusammen.

Die Anordnung gemäß Anspruch 9 ist strömungstechnisch günstig und führt zu einer guten Festlegung und Abdichtung der Filterelemente gegenüber dem Außenrahmen. Jede Gegenfläche kann zum Beispiel einerseits an dem zugehörigen Schenkel befestigt und andererseits durch einen Stützsteg an der Basis oder an einer den Längskanal definierenden Zwischenwand jedes Profils des Außenrahmens abgestützt sein. Dadurch gewinnen die Profile des Außenrahmens auch bei geringer Wanddicke zusätzlich an Steifigkeit.

Mit den Merkmalen des Anspruchs 10 ergibt sich eine sichere Halterung des Filterelements in dem Außenrahmen. Die Halterippen des Außenrahmens verriegeln und halten ihr äußeres Längsprofil in der optimalen Betriebsposition.

Diese Wirkung wird auch durch die Merkmale des Anspruchs 11 unterstützt.

Gemäß Anspruch 12 ergibt sich eine sichere Halterung der Filtertasche in dem Rahmensystem und zusätzlich eine in den meisten Fällen ausreichende Abdichtung der Filtertasche gegenüber dem Rahmensystem.

Bei Bedarf kann die Abdichtung gemäß Anspruch 13 noch abgesichert werden.

Diesem Zweck dienen auch die Merkmale des Anspruchs 14.

Gemäß Anspruch 15 kann jedes Filterelement in die Schenkelprofile des Außenrahmens in einfacher Weise eingeschoben werden.

Gemäß Anspruch 16 ergibt sich in der Regel schon eine gute Abdichtung der Filtertasche gegenüber dem Rahmensystem.

Bei Bedarf kann diese Abdichtung gemäß Anspruch 17 noch verbessert werden.

Die Merkmale des Anspruchs 18 fördern die Halterung und Abdichtung der Filtertasche gegenüber dem Rahmensystem.

Diese Wirkung kann gemäß Anspruch 19 noch verbessert werden.

Durch die besondere Art der Eckverbinder und ihr Zusammenwirken mit den benachbarten Profilen des Außenrahmens gemäß Anspruch 20 erhält man eine sehr leicht, sicher und formstabil herstellbare Verbindung der einzelnen Profile des Außenrahmens miteinander. Anfänglich werden nur die beiden Schenkelprofile an das Basisprofil angesteckt, wodurch sich ein U-förmiger Außenrahmen ergibt. In diesen werden sodann die Filterelemente nacheinander eingefügt. Schließlich wird hinter dem letzten Filterelement das Schließprofil über seine beiden Eckverbinder mit den angrenzenden Schenkelprofilen des Außenrahmens zu einem vollständigen und steifen Außenrahmen verbunden. Zwischen der Zunge jedes Eckverbinders und dem zugehörigen Längskanal im angrenzenden Profil kann eine die Stabilität fördernde, verhältnismäßig enge Passung bestehen.

Gemäß Anspruch 21 ergibt sich eine formschlüssige Verriegelung jedes Eckverbinders mit den angrenzenden Profilen. Dies erhöht wiederum die Festigkeit und Steifigkeit des gesamten Außenrahmens. Diese formschlüssige Verriegelung ist lösbar. Dazu kann der den Verriegelungszapfen tragende Teil der Zunge mit einem Werkzeug, zum Beispiel einem Schraubendreher, elastisch eingedrückt werden, bis der Verriegelungszapfen die Verriegelungsöffnung verlassen hat. Sodann werden Eckverbinder und Profil auseinandergezogen.

Auch gemäß Anspruch 22 ergibt sich eine formschlüssige, lösbare Verbindung des Eckverbinders mit den angrenzenden Profilen.

Die Merkmale des Anspruchs 23 erleichtern die Herstellung der Schnappverbindung. Die Höhe des Verriegelungszapfens kann zum Beispiel von Null ausgehen. Dadurch entsteht eine keilförmige Gestalt des Verriegelungszapfens, die beim Zusammendrücken von Eckverbinder und angrenzendem Profil zu einer federnden Auslenkung des äußeren Zungenteils führt.

Die Merkmale des Anspruchs 24 ergeben einen besonders verbindungssteifen Längskanal und einen entsprechend steifen Außenrahmen insgesamt.

Gemäß Anspruch 25 ergibt sich eine Vereinfachung in der Herstellung der Profile bei ausreichender oder sogar noch gesteigerter Stabilität der Profile.

Die Merkmale des Anspruchs 26 erleichtern die Bewegung der Zungen in den Innenräumen. Vorzugsweise sind die Führungsrippen parallel zu der Einführungsrichtung der Zungen angeordnet.

Gemäß Anspruch 27 ergibt sich eine zusätzliche Versteifung der Zungen.

Dem gleichen Ziel dienen die Merkmale des Anspruchs 28.

Die Merkmale des Anspruchs 29 erleichtern und verbessern die Bewegung der Zunge in dem Innenraum der Profile. Vorzugsweise sind die Gleitrippen parallel zu der Einführungsrichtung der Zungen angeordnet.

Die Merkmale des Anspruchs 30 bewirken eine bessere Abdichtung des Grundkörpers gegenüber den Profilen des Außenrahmens.

Gemäß Anspruch 31 ergibt sich eine zusätzliche Versteifung des Verbundes benachbarter Innenrahmen.

Diese und weitere Merkmale und Vorteile der Erfindung werden nachfolgend anhand der in den Zeichnungen dargestellten Ausführungsbeispiele näher erläutert. Es zeigt:

Fig. 1 in perspektivischer, schematischer Darstellung den Außenrahmen und zwei Filterelemente,

Fig. 2 die Schnittansicht nach Linie II-II in Fig. 1 in vergrößerter Darstellung mit einer schematischen Montagevorrichtung,

Fig. 3 die Schnittansicht nach Linie III-III in Fig. 1 in vergrößerter Darstellung,

Fig. 4 eine Seitenansicht eines Eckverbinders gemäß Fig. 1 in vergrößerter Darstellung,

Fig. 5 die Ansicht entsprechend Pfeil V in Fig. 4 auf eine andere Ausführungsform des Eckverbinders,

Fig. 6 die teilweise geschnittene Ansicht gemäß Linie VI-VI in Fig. 4,

Fig. 7 die Schnittansicht nach Linie VII-VII in Fig. 5,

Fig. 8 die Draufsicht auf einen einstückigen Innenrahmen,

Fig. 9 die Schnittansicht nach Linie IX-IX in Fig. 8 durch mehrere nebeneinander angeordnete Filterelemente mit Innenrahmen,

Fig. 10 die Draufsicht auf einen zweiteiligen Innenrahmen,

Fig. 11 die Schnittansicht nach Linie XI-XI in Fig. 10 in vergrößerter Darstellung,

Fig. 12 die Ansicht nach Pfeil XII in Fig. 10 in vergrößerter Darstellung,

Fig. 13 ein Detail aus Fig. 9 mit einer Preßpassung im Verbindungsbereich,

Fig. 14 eine der Fig. 2 entsprechende Schnittansicht mit einer anderen Ausführungsform der Profile des Außenrahmens,

Fig. 15 eine der Fig. 3 entsprechende Schnittansicht durch die andere Ausführungsform,

Fig. 16 die Ansicht gemäß Linie XVI-XVI in Fig. 17 auf eine andere Ausführungsform des Eckverbinders,

Fig. 17 die Draufsicht auf einen Eckverbinder gemäß Fig. 16,

Fig. 18 die Seitenansicht gemäß Linie XVIII-XVIII in Fig. 16,

Fig. 19 die Schnittansicht nach Linie XIX-XIX in Fig. 18 und

Fig. 20 eine der Fig. 14 entsprechende Schnittansicht mit einer eingeschobenen Zunge des Eckverbinders.

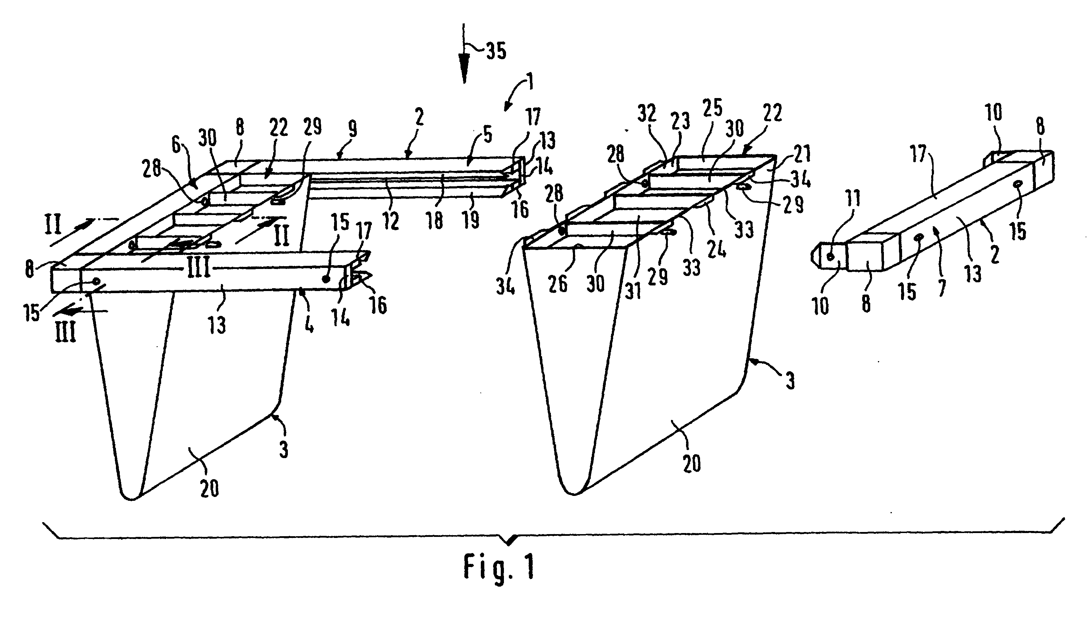

Fig. 1 zeigt einen Taschenfilter 1 mit einem Außenrahmen 2 aus Kunststoff und Filterelementen 3, die nebeneinander in dem Außenrahmen 2 angeordnet werden.

Der Außenrahmen 2 weist gegenüberliegende Schenkelprofile 4 und 5, ein Basisprofil 6 und ein Schließprofil 7 auf. In dem Montagezustand gemäß Fig. 1 sind die Schenkelprofile 4, 5 jeweils durch einen Eckverbinder 8 mit dem Basisprofil 6 zu einem U-förmigen Teil 9 des Außenrahmens 2 fest verbunden. Jeder Eckverbinder 8 weist zwei im rechten Winkel zueinander von einem Grundkörper des Eckverbinders 8 abstehende Zungen 10 auf. Jede Zunge 10 trägt auf ihrer Außenseite einen Verriegelungszapfen 11.

Die Profile 4 bis 7 weisen alle die gleiche Querschnittsgestaltung auf und sind vorzugsweise aus einem geeigneten Kunststoff stranggepreßt. Auf diese Weise können die Profile 4 bis 7 auf die jeweils benötigte Länge abgelängt und zu einem Außenrahmen gewünschter Abmessungen mittels der Eckverbinder 8 zusammengesetzt werden. Jedes Profil 4 bis 7 weist einen im wesentlichen U-förmigen Querschnitt mit einem nach innen offenen Innenraum 12 auf. In jedem Innenraum 12 ist, angrenzend an eine Basiswand 13 des Profils 4 bis 7 ein Längskanal 14 ausgebildet. In den Längskanal 14 jedes Profils 4 bis 7 wird von jeder Stirnseite des Profils 4 bis 7 die Zunge 10 des zugehörigen Eckverbinders eingeführt, bis die Stirnseite des Profils 4 bis 7 zur Anlage an dem Grundkörper des jeweiligen Eckverbinders 8 kommt. In diesem Augenblick schnappt der Verriegelungszapfen 11 in eine in der Basiswand 13 vorgesehene Verriegelungsöffnung 15 und sichert damit die Steckverbindung aus Profil 4 bis 7 einerseits und Eckverbinder 8 andererseits. Dabei kann die Basiswand 13 elastisch vor dem Verriegelungszapfen 11 ausweichen. Die Zunge 10 kann alternativ gemäß den Fig. 4 und 6 mit einem Querschlitz 73 versehen werden, um einen äußeren Teil 74 der Zunge 10 selbst federnd zu gestalten. Die Zunge 10 kann auch gemäß Fig. 4 und 6 auf jeder Seite des Verriegelungszapfens 11 einen Längsschlitz 75 und 76 aufweisen, die zwischen sich einen den Verriegelungszapfen 11 tragenden, federnden Hebel 77 definieren. Der Hebel 77 weist an seiner Innenseite eine Ausnehmung 78 zur Verringerung seiner Dicke auf.

Jedes Profil 4 bis 7 des Außenrahmens 2 weist von der Basiswand ausgehende Schenkel 16 und 17 auf. Vom freien Ende jedes Schenkels 16, 17 erstreckt sich eine Halterippe 18 und 19 widerhakenähnlich in Richtung der Basiswand 13.

Jedes Filterelement 3 weist eine Filtertasche 20 aus an sich bekanntem Filtermedium auf. In den freien Rand 21 jeder Filtertasche 20 ist ein im Fall der Fig. 1 einstückiger Innenrahmen 22 eingesetzt, der vorzugsweise aus Kunststoff im Spritzgießverfahren hergestellt worden ist. Der Innenrahmen 22 weist zwei gegenüberliegende Längsprofile 23 und 24 und zwei an den Enden der Längsprofile 23, 24 befestigte, gegenüberliegende Stirnprofile 25 und 26 auf.

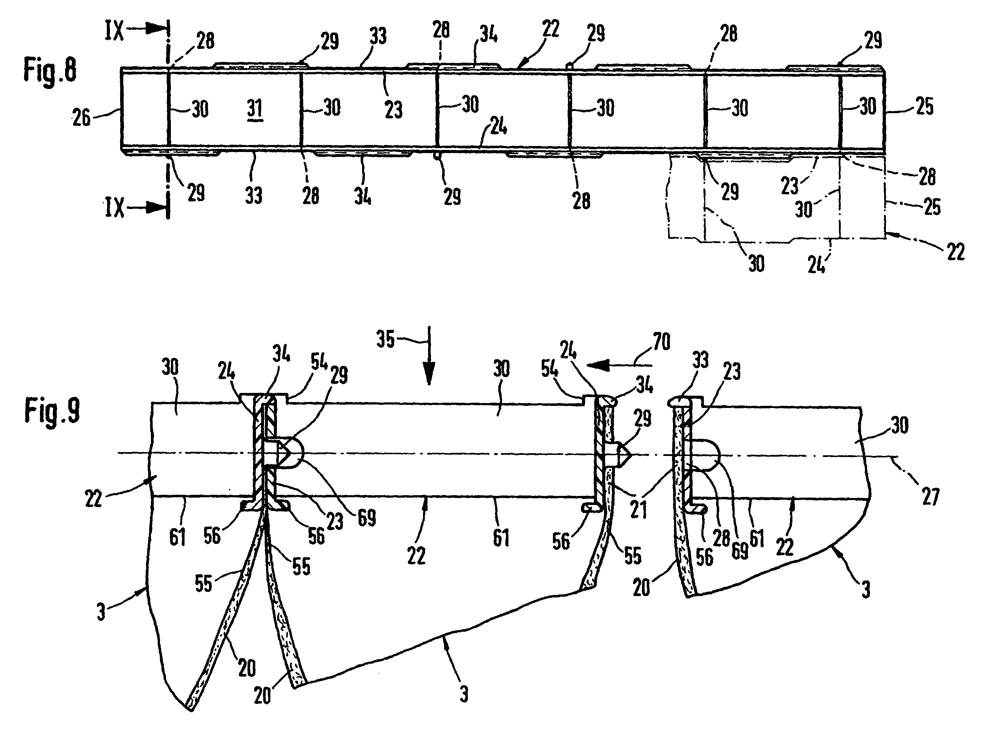

In einer Querebene 27 (Fig. 9) jedes Innenrahmens sind in jedem Längsprofil 23, 24 im Abstand voneinander Löcher 28 und sich nach außen erstreckende, zu den Löchern 28 komplementäre Vorsprünge 29 im Wechsel angeordnet. Dabei liegt jedem Loch 28 in dem einen Längsprofil 23 ein Vorsprung 29 in dem anderen Längsprofil 24 gegenüber. Annähernd in Fluchtung mit jedem Loch 28 und jedem Vorsprung 29 erstreckt sich eine an dem zugehörigen Längsprofil 23, 24 befestigte Querwand 30 in eine Einlaßöffnung 31 des Innenrahmens 22. Jeder Vorsprung 29 durchdringt den freien Rand 21 der zugehörigen Filtertasche und, wenn das in Fig. 1 rechte Filterelement 3 ebenfalls in den U-förmigen Teil 9 des Außenrahmens 2 eingeschoben wird, auch den freien Rand 21 der dann benachbarten Filtertasche 20, bevor der Vorsprung in das komplementäre Loch 28 des zu der benachbarten Filtertasche 20 gehörenden Innenrahmens 22 eindringt. Durch diese gegenseitige "Verstiftung" benachbarter Innenrahmen 22 werden einerseits die zugehörigen Filtertaschen 20 an ihrem freien Rand 21 fixiert und dichtend eingeklemmt und zum anderen die Stabilität des Verbundes benachbarter Innenrahmen 22 gefördert.

Jedes Längsprofil 23, 24 des Innenrahmens 22 weist an einer Einlaßseite 32 des Innenrahmens 22 einen nach außen vorspringenden, periodisch durch eine Ausnehmung 33 unterbrochenen Außenflansch 34 auf. Jeder Außenflanschabschnitt 34 eines Innenrahmens 22 greift bei aneinandergeschobenen Filterelementen 3 in eine Ausnehmung 33 eines benachbarten Innenrahmens 22 ein. An jedem Innenrahmen 22 liegt jedem Außenflanschabschnitt 34 des einen Längsprofils 23 eine Ausnehmung 33 des anderen Längsprofils 24 gegenüber. Bei in dem Außenrahmen 2 aneinandergeschobenen Filterelementen 3 führen die ineinander verzahnten Außenflanschabschnitte 34 und Ausnehmungen 33 zu einer weiteren Erhöhung der Stabilität des Verbundes der Filterelemente 3 miteinander und letztlich mit dem Außenrahmen 2.

Nachdem das letzte Filterelement 3 in den U-förmigen Teil 9 des Außenrahmens 2 eingeschoben worden ist, wird das gemäß Fig. 1 schon mit zwei Eckverbindern 8 versehene Schließprofil 7 mit den freien Zungen 10 seiner Eckverbinder 8 in die Längskanäle 14 der Schenkelprofile 4, 5 eingeführt und dort mit den Verriegelungszapfen 11 in den Verriegelungsöffnungen 15 verriegelt. Damit ist das gesamte Taschenfilter 1 fertig montiert und einsatzbereit.

In Fig. 1 ist die Strömungsrichtung 35 des zu filternden Mediums eingezeichnet.

Gemäß Fig. 2 weist das an dem Basisprofil 6 angeordnete Filterelement 3 ein dem Basisprofil 6 zugewandtes äußeres Längsprofil 36 auf. Das äußere Längsprofil 36 besitzt eine Höhe 37, die größer als ein lichter Abstand 38 zwischen den Halterippen 18, 19 des Basisprofils 6 ist.

In einem Abstand 39 von dem freien Ende jeder Halterippe 18, 19 ist in dem Innenraum 12 jedes Profils 4 bis 7 eine Gegenfläche 40 des Profils 4 bis 7 angeordnet. In einem durch den Abstand 39 definierten Zwischenraum 41 wird bei allen Profilen 4 bis 7 der freie Rand 21 wenigstens eines der Filterelemente 3 untergebracht.

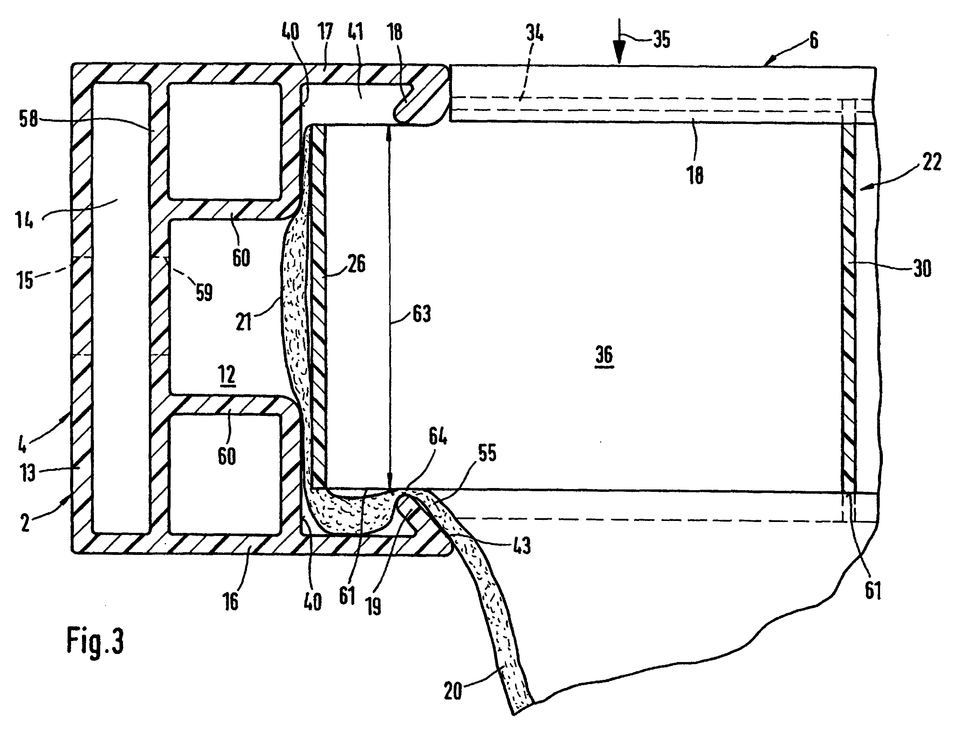

Im Fall der Fig. 2 ist auf diese Weise nur der freie Rand 21 desjenigen Filterelements 3 untergebracht, daß das äußere Längsprofil 36 aufweist. Dies geht in folgender Weise vor sich:
Das in Fig. 1 linke, also erste Filterelement wird in das rechte, freie Ende des U-förmigen Teils 9 des Außenrahmens 2 eingeführt (vgl. Fig. 3) und in den Schenkelprofilen 4, 5 nach links verschoben, bis das äußere Längsprofil 36 an äußeren Schrägflächen 42 und 43 der Halterippen 18, 19 anstößt. Spätestens von diesem Zeitpunkt an kann eine Montagevorrichtung 44 eingesetzt werden, die in Fig. 2 nur schematisch dargestellt ist. Die Montagevorrichtung 44 weist einen rechenartigen Drückkörper 45 auf, der mit jeweils einem Drückschuh 46 zwischen benachbarten Querwänden 30 in Berührung mit einer Rückseite 47 des äußeren Längsprofils 36 geführt wird. Der Drückkörper 45 ist an einem C-förmigen Betätigungsrahmen 48 befestigt, der seinerseits an einer Kolbenstange 49 einer doppeltwirkenden Kolben-Zylinder-Einheit 50 befestigt ist. Die Kolben-Zylinder-Einheit 50 ist an der Außenseite eines Haltewinkels 51 befestigt, auf deren gegenüberliegender Seite sich die Basiswand 13 abstützt.

Wenn nun die in Fig. 2 rechte Seite des Kolbens 52 mit Druckfluid beaufschlagt wird, wird der Betätigungsrahmen 48 und damit der Drückkörper 45 nach links gezogen. Dadurch werden oben die Außenflanschabschnitte 34 und unten der freie Rand 21 der Filtertasche 20 mit einem unteren Rand 53 des äußeren Längsprofils 36 gegen die äußeren Schrägflächen 42, 43 gepreßt. Dies hat zur Folge, daß die Halterippen 18, 19 zusammen mit den Schenkel 16, 17 elastisch nach außen schwenken, bis das äußere Längsprofil 36 mit dem freien Rand 21 der Filtertasche 20 in den Zwischenraum 41 eingetreten ist. Sodann federn die Schenkel 16, 17 mit ihren Halterippen 18, 19 wieder in die in Fig. 2 gezeigte Ausgangslage zurück. Dabei legt sich die Halterippe 18 positionierend und verriegelnd hinter eine Schulter 54 jeder Querwand 30. Gemäß Fig. 2 wird eine Wand 55 der Filtertasche 20 zwischen freien Enden eines Innenflansches 56 am unteren Rand 53 und der gegenüberliegenden Halterippe 19 schikanenartig geführt und komprimiert. Durch den Differenzdruck aufgrund des durchströmenden, zu filternden Mediums wird ferner die Wand 55 der Filtertasche 20 fest an die äußere Schrägfläche 43 der Halterippe 19 angelegt. Schon durch diese Maßnahmen ergibt sich in der Regel eine ausreichende Abdichtung der Filtertasche 20 gegenüber dem Basisprofil 6. Bei Bedarf kann zusätzlich der freie Rand 21 der Filtertasche 20 mit dem äußeren Längsprofil 36 oder der gesamten Außenfläche des Innenrahmens 22 verklebt werden. Eine Verklebung kann entweder alternativ oder zusätzlich zwischen der Wand 55 einerseits und dem Schenkel 16 und/oder der Halterippe 19 andererseits erfolgen.

Eine Unterseite 57 jedes Außenflanschabschnitts 34 dient als Anschlag für den freien Rand 21 der zugehörigen Filtertasche 20, wenn der Innenrahmen 22 in diesen freien Rand 21 anfänglich eingeführt wird und bevor die Vorsprünge 29 durch den freien Rand 21 hindurchgedrückt werden.

In Fig. 2 ist verdeutlicht, daß der Längskanal 14 auch durch eine zu der Basiswand parallele Zwischenwand 58 begrenzt ist. Aus fertigungstechnischen Gründen befindet sich in axialer Fluchtung mit der Verriegelungsöffnung 15 jeweils eine Durchbrechung 59 in der Zwischenwand 58. So kann die Verriegelungsöffnung 15 auf einfache Weise dadurch hergestellt werden, daß auch durch die Zwischenwand 58 in Form der Durchbrechung 59 hindurchgestanzt wird. Die Gegenflächen 40 sind jeweils über eine Stützwand 60 an der Zwischenwand 58 abgestützt. Auf diese Weise entstehen im Innenraum 12 zwei zusätzliche, geschlossene Profile von etwa quadratischer Querschnittsfläche, die erheblich zur Versteifung der Profile 4 bis 7 beitragen. In der in Fig. 2 gezeigten montierten Situation befindet sich eine Unterkante 61 jeder Querwand 30 in einem geringen Abstand 62 von einer Oberkante der Halterippe 19. Die Unterkanten 61 liegen auf der Wand 55 der Filtertasche 20 auf und bestimmen auf diese Weise die Höhenposition des Filterelements 3 relativ zu dem Außenrahmen 2.

Die im Zusammenhang mit Fig. 2 beschriebenen Verhältnisse gelten gleichermaßen für das Zusammenwirken des Schließprofils 7 (Fig. 1) mit einem letzten Filterelement 3, das schließlich in den U-förmigen Teil 9 des Außenrahmens 2 eingeschoben wurde. In diesem Fall legt sich der Drückkörper 45 der Montagevorrichtung 44 gegen die Basiswand 13 des Schließprofils 7 und preßt dieses gegen das gegenüberliegende äußere Längsprofil 36 des zugehörigen Filterelements 3, bis dieses äußere Längsprofil 36 in den zugehörigen Zwischenraum 41 des Schließprofils 7 einschnappt und gleichzeitig die Verriegelungszapfen 11 der Eckverbinder 8 in die Verriegelungsöffnungen 15 der Schenkelprofile 4, 5 einrasten.

In Fig. 3 sind am Beispiel des Schenkelprofils 4 die Verhältnisse im montierten Zustand dargestellt. Diese Verhältnisse gelten spiegelbildlich auch für das nicht gezeichnete Schenkelprofil 5 (Fig. 1).

Das Stirnprofil 26 und zumindest die in den Zwischenraum 41 des Schenkelprofils 4 eintauchenden Bereiche der Längsprofile 23, 24, 36 jedes Innenrahmens 22 weisen eine Höhe 63 auf, die etwas kleiner als der lichte Abstand 38 (vgl. Fig. 2) zwischen den Halterippen 18, 19 des Schenkelprofils 4 ist. Auf diese Weise läßt sich das Stirnprofil 26 mit dem außen daran anliegenden freien Rand 21 der Filtertasche 20 sowie auch die an den freien Rand 21 anschließende Wand 55 der Filtertasche 20 leicht axial in den Zwischenraum 41 einschieben und in dem Zwischenraum 41 bis in die Endlage verschieben. Gleichzeitig wird die Wand 55 der Filtertasche 20 zwischen den Unterkanten 61 der Längsprofile 23, 24, 36 des Innenrahmens 22 und der gegenüberliegenden Halterippe 19 des Außenrahmens 2 schikanenartig geführt und komprimiert, wie das in Fig. 3 an der Kompressionsstelle 64 gezeichnet ist. Die Wand 55 kann mit der Halterippe 19, einschließlich ihrer äußeren Schrägfläche 43, und der Innenfläche des Schenkels 16 verklebt sein, um die Dichtwirkung zu verbessern.

Der freie Rand 21 der Filtertasche 20 wird durch das Stirnprofil 26 des Innenrahmens 22 an die Gegenflächen 40 des Schenkelprofils 4 des Außenrahmens 2 angedrückt. Normalerweise ist schon hierdurch eine ausreichende Abdichtung zwischen Innenrahmen 22 und Außenrahmen 2 auch im Bereich der Schenkelprofile 4, 5 erzielt. Hilfsweise kann der freie Rand 21 zusätzlich mit den Stirnprofilen 25, 26 und/oder den Gegenflächen 40 verklebt werden.

Fig. 4 zeigt einen der Eckverbinder 8. Er weist einen würfelähnlichen, aber hohlen Grundkörper 65 auf, von dem aus sich unter einem rechten Winkel die Zungen 10 erstrecken. Jede Zunge 10 ist an ihrem freien Ende mit einer Schneide 66 versehen, die das Einführen der Zunge 10 in den zugehörigen Längskanal 14 (Fig. 1) erleichtert. Der Verriegelungszapfen 11 jeder Zunge 10 ist von kreisförmiger Querschnittsfläche. Jede Zunge 10 ist gegenüber der zugehörigen Außenfläche des Grundkörpers 65 um einen Abstand 67 zurückgesetzt. Der Abstand 67 entspricht der Dicke der Basiswand 13 der Profile 4 bis 7 (vgl. z. B. Fig. 2). Die in Fig. 4 linke Zunge 10 weist den Querschlitz 73 und den federnden äußeren Teil 74 auf. Die zu Fig. 4 rechte Zunge 10 ist mit den Längsschlitzen 75, 76, dem federnden Hebel 77 und der Ausnehmung 78 des Hebels 77 versehen.

Die Figuren 5 bis 7 zeigen in weiteren Ansichten weitere Einzelheiten des Eckverbinders 8.

Die Höhe jedes Verriegelungszapfens 11 nimmt gemäß Fig. 6 von Null zu einem Fuß 68 der Zunge 10 hin stetig zu. So entsteht außen an jedem Verriegelungszapfen 11 eine schiefe Ebene, die das Eindrücken der Zunge 10 in den Längskanal 14 (Fig. 1) erleichtert. Jeder Verriegelungszapfen 11 schnappt schließlich, wie zuvor erwähnt, in die zugehörige Verriegelungsöffnung 15 der Basiswand 13. Die in Fig. 6 untere Zunge 10 zeigt als Beispiel den Querschlitz 73 und den federnden äußeren Teil 74, während die obere Zunge 10 den Hebel 77 und seine Ausnehmung 78 verdeutlicht.

Fig. 8 zeigt die Draufsicht auf einen einstückigen Innenrahmen 22 in voll ausgezogenen Linien und einen Teil eines weiteren, damit gekuppelten gleichartigen Innenrahmens 22 in strichpunktierten Linien. Entlang jedes der Längsprofile 23, 24 ist die wechselweise Aufeinanderfolge sowohl der Ausnehmungen 33 und der Außenflanschabschnitte 34 als auch der Löcher 28 und der Vorsprünge 29 zu erkennen. In der Einlaßöffnung 31 des Innenrahmens 22 ist jede der Querwände 30 diesmal in genauer Fluchtung mit einem Loch 28 in dem einen der Längsprofile 23, 24 und einem Vorsprung 29 in dem anderen der Längsprofile 24, 23 angeordnet. Jeder Außenflanschabschnitt 34 des einen Innenrahmens 22 greift in die komplementäre Ausnehmung 33 des benachbarten Innenrahmens 22 ein. Zur Vereinfachung der Darstellung sind in Fig. 8 die freien Ränder der zugehörigen Filtertaschen fortgelassen.

Die Filtertaschen 20 und ihre freien Ränder 21 sind allerdings in Fig. 9 deutlich in ihrem Zusammenwirken mit den Innenrahmen 22 gezeigt. Links in Fig. 9 sind zwei Innenrahmen 22, 22 in der aneinandergepreßten Betriebsstellung gezeichnet, in der zwischen benachbarten Längsprofilen 23, 24 die freien Ränder 21 beider Filtertaschen 20 komprimiert sind. Der Vorsprung 29 ist an seinem freien Ende zugespitzt und hat die freien Ränder 21 durchdrungen. In dem Bewegungsbereich jedes Vorsprungs 29 ist hinter dem zugehörigen Loch 28 des benachbarten Längsprofils 23 jeweils eine Ausnehmung 69 in der angrenzenden Querwand 30 ausgebildet. Das in Fig. 9 rechte Filterelement wird gerade in Richtung eines Pfeils 70 auf das mittlere Filterelement 3 zu bewegt. So sind die Teile im Kupplungsbereich gut zu erkennen.

In allen Zeichnungsfiguren sind gleiche Teile mit gleichen Bezugszahlen versehen.

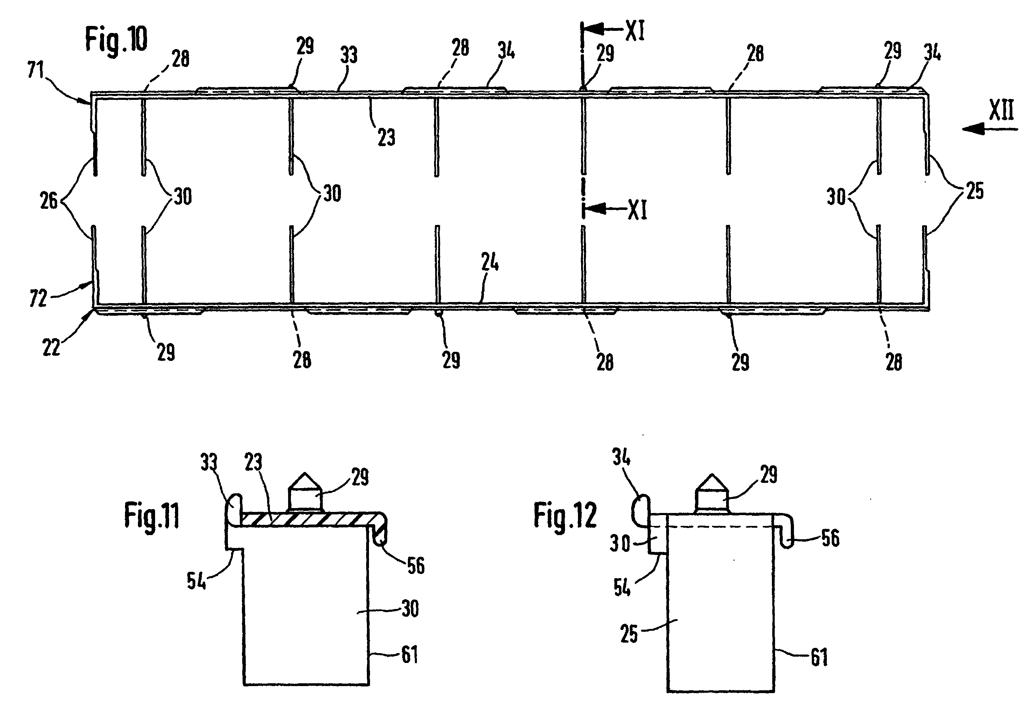

In den Fig. 10 bis 12 ist ein alternativer zweiteiliger Innenrahmen 22 dargestellt, dessen beide Teile 71 und 72 vorzugsweise identisch ausgebildet sind. Die Teile 71, 72 werden, wie in Fig. 10 gezeigt, mit ihren anteiligen Stirnprofilen 25, 26 und anteiligen Querwänden 30 gegeneinander gekehrt und dann so weit gegeneinander verschoben, bis die für den betreffenden Einsatzfall gewünschte Breite des Innenrahmens 22 erreicht ist. In diesem Zustand überlappen die freien Enden der Stirnprofile 25, 26 und der Querwände 30 der beiden Teile 71, 72 einander mehr oder weniger. In dem Überlappungsbereich findet jeweils eine Verbindung der zugehörigen freien Enden miteinander statt. Dies kann zum Beispiel durch Heften mit Heftklammern, durch Kleben oder durch Verschweißen, zum Beispiel mit Ultraschallschweißung, geschehen. So können mit einem Satz der Teile 71, 72 Innenrahmen 22 von unterschiedlicher Breite hergestellt werden.

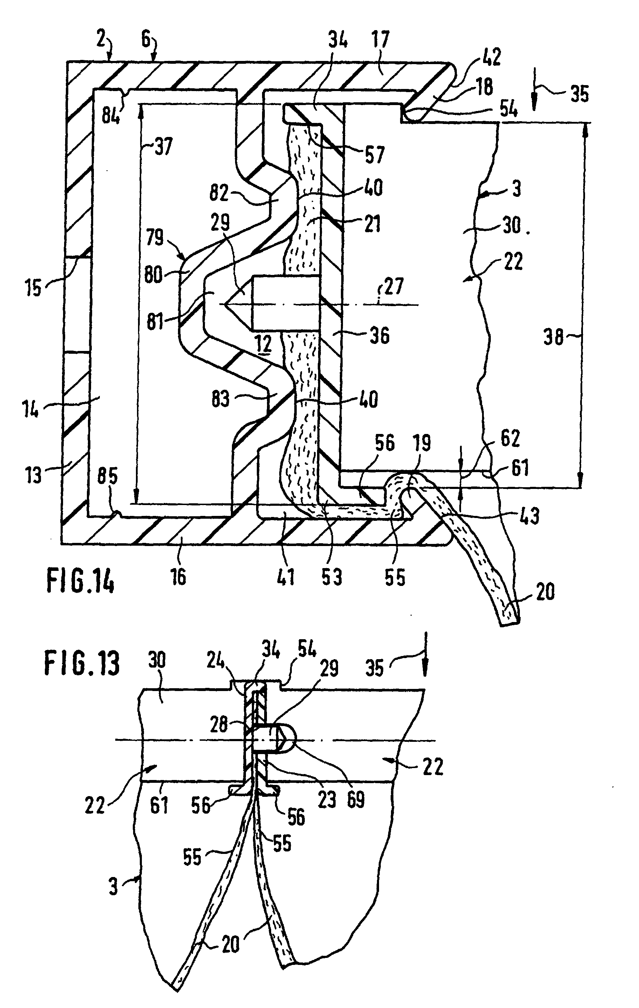

Gemäß Fig. 13 sind die Vorsprünge 29 mit einer Preßpassung in den Löchern 28 und ggf. in den Ausnehmungen 69 angeordnet. Dadurch erhöht sich die Steifigkeit der die beiden Wände 55, 55 zwischen sich aufnehmenden, gegeneinander gepreßten Innenrahmen 22, 22.

Gemäß Fig. 14 ist eine der Basiswand 13 gegenüberliegende Zwischenwand 79 gewellt. Ein Wellenberg 80 der Zwischenwand 79 nimmt mit einer Ausnehmung 81 freie Enden der benachbarten Vorsprünge 29 auf. Im Abstand voneinander angeordnete Wellentäler 82 und 83 der Zwischenwand 79 definieren die Gegenflächen 40, 40. Im Fall der Fig. 14 wird, in Abweichung von Fig. 2, der freie Rand 21 der Filtertasche 20 auch zwischen dem äußeren Längsprofil 36 des Innenrahmens 22 und den Gegenflächen 40, 40 komprimiert.

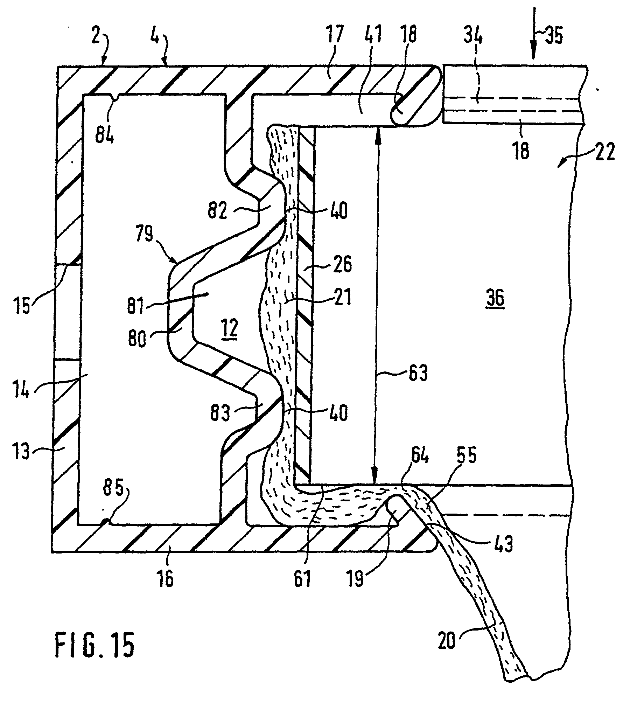

Die gleiche Kompression des freien Randes 21 geschieht gemäß Fig. 15 zwischen dem Stirnprofil 26 des Innenrahmens 22 und den Gegenflächen 40, 40.

Gemäß Fig. 14 und 15 ragen in den Innenraum der Profile 6, 4 Führungsrippen 84 und 85 hinein, die sich parallel zur Längsachse der Profile 6, 4 erstrecken und eine Führung der Eckverbinder 8 mit begrenzter Oberfläche und entsprechend geringer Reibung übernehmen.

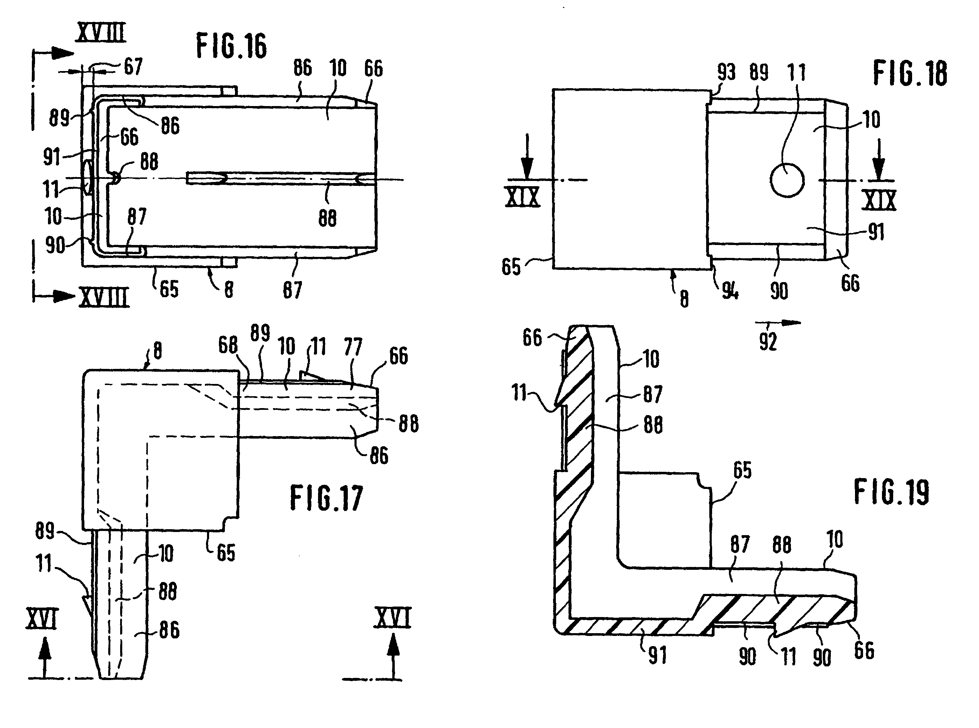

In den Fig. 16 bis 19 ist eine andere Ausführungsform des Eckverbinders 8 in unterschiedlichen Ansichten dargestellt. Hier weist jede Zunge 10 einen im wesentlichen U-förmigen Querschnitt mit einer Basis 91 und mit von der Basis 91 nach innen ragenden Seitenwänden 86 und 87 auf. Von der Basis 91 jeder Zunge 10 erstreckt sich außerdem in deren Längsrichtung eine Versteifungsrippe 88. Von jeder Zunge 10 erstrecken sich ferner im Abstand voneinander angeordnete, an der Basiswand 13 des Profils 4 bis 7 abstützbare Gleitrippen 89 und 90 parallel zu einer Einführungsrichtung 92 der Zunge 10.

In Fig. 18 ist dargestellt, daß der Grundkörper 65 des Eckverbinders 8 seitlich Anlagerippen 93 und 94 aufweist, die zur Anlage an dem zugehörigen Profil 4 bis 7 bestimmt sind und in Richtung des in Fig. 18 nicht gezeichneten Profils 4 bis 7 vorspringen. Zwischen diesen Anlagerippen 93, 94 ist der Grundkörper 95 also freigearbeitet, so daß sich eine Anlage zwischen den Anlagerippen 93, 94 und dem gegenüberliegenden Profil 4 bis 7 unabhängig von den Fertigungstoleranzen des Eckverbinders 8 ergibt.

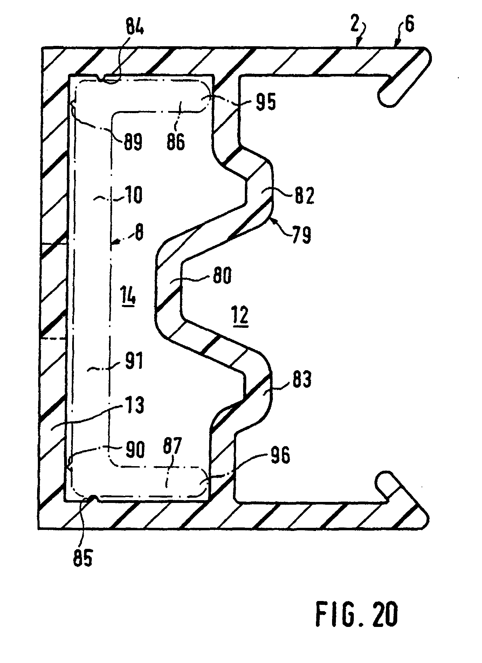

Gemäß Fig. 20 ist eine strichpunktierte Zunge 10 des Eckverbinders 8 in den Längskanal 14 des Basisprofils 6 eingeschoben. Dabei werden die an der Basis 91 befestigten Enden der Seitenwände 86, 87 durch die Führungsrippen 84, 85 geführt und in dem Längskanal 14 zentriert. Die Gleitrippen 89, 90 liegen in der Verlängerung der Seitenwände 86, 87 deren freien Enden 95 und 96 gegenüber. Wie Fig. 20 zeigt, stützen sich bei eingeschobener Zunge 10, die Gleitrippen 89, 90 an der Basiswand 13 und die freien Enden 95, 96 an der Zwischenwand 79 ab. Dies kann mit einer strammen Gleitpassung geschehen, um die Zunge 10 insgesamt stramm und sicher geführt in dem Längskanal 14 zu halten.

## Patentansprüche

1. Taschenfilter (1).
mit einem Außenrahmen (2) aus Kunststoff und mehreren, nebeneinander in dem Außenrahmen (2) angeordneten Filterelementen (3),
wobei der Außenrahmen (2) gegenüberliegende Schenkelprofile (4,5), ein Basisprofil (6) und ein Schließprofil (7) aufweist, die jeweils einen im wesentlichen U-förmigen Querschnitt mit einem nach innen offenen Innenraum (12) aufweisen und an den Ecken des Außenrahmens (2) miteinander verbindbar sind,
wobei jedes Profil (4 bis 7) des Außenrahmens (2) eine Basiswand (13) und von der Basiswand (13) ausgehende Schenkel (16,17) aufweist,
wobei sich von dem freien Ende jedes Schenkels (16,17) in den Innenraum (12) des Profils (4 bis 7) eine Halterippe (18,19) erstreckt und die Halterippen (18,19) in einem lichten Abstand (38) voneinander angeordnet sind,
wobei innerhalb eines freien Randes (21) jeder Filtertasche (20) ein Innenrahmen (22) aus Kunststoff des zugehörigen Filterelements (3) angeordnet ist,
wobei jeder Innenrahmen (22) zwei gegenüberliegende Längsprofile (23,24) und zwei an den Enden der Längsprofile (23,24) befestigte, gegenüberliegende Stirnprofile (25,26) aufweist,
wobei in einer Querebene (27) jedes Innenrahmens (22) in jedem Längsprofil (23,24) im Abstand voneinander wenigstens zwei Löcher (28) und wenigstens zwei sich nach außen erstreckende komplementäre Vorsprünge (29) im Wechsel angeordnet sind, wobei jedem Loch (28) in dem einen Längsprofil (23,24) ein Vorsprung (29) in dem anderen Längsprofil (24,23) gegenüberliegt,
wobei sich an dem zugehörigen Längsprofil (23,24) befestigte Querwände (30) in eine Einlaßöffnung (31) des Innenrahmens (22) erstrecken,
wobei jeder Vorsprung (29) des Innenrahmens (22) den freien Rand (21) der zugehörigen Filtertasche (20) und den freien Rand (21) einer benachbarten Filtertasche (20) durchdringt und in das komplementäre Loch (28) des zu der benachbarten Filtertasche (20) gehörenden Innenrahmens (22) eindringt,
und wobei jedes Filterelement (3) mit dem freien Rand (21) seiner Filtertasche (20) abgedichtet in den Innenraum (12) der angrenzenden Profile (4 bis 7) des Außenrahmens (2) eingreift,
**dadurch gekennzeichnet, daß** zumindest annähernd in Fluchtung mit jedem Loch (28) und dem gegenüberliegenden Vorsprung (29) der Längsprofile (23,24) jedes Innenrahmens (22) sich eine der Querwände (30) erstreckt.

2. Taschenfilter nach Anspruch 1,
**dadurch gekennzeichnet, daß** jeder Innenrahmen (22) einstückig ausgebildet ist.

3. Taschenfilter nach Anspruch 1,
**dadurch gekennzeichnet, daß** jeder Innenrahmen (22) zweiteilig ausgebildet ist,
daß sich die Querwände (30) und die Stirnprofile (25,26) beider Teile (71,72) des Innenrahmens (22) überlappen,
und daß die einander überlappenden Querwände (30) und Stirnprofile (25,26) jeweils im Überlappungsbereich aneinander befestigt sind.

4. Taschenfilter nach einem Ansprüche 1 bis 3,
**dadurch gekennzeichnet, daß** jedes Längsprofil (23,24) des Innenrahmens (22) an einer Einlaßseite des Innenrahmens (22) einen nach außen vorspringenden, periodisch durch eine Ausnehmung (33) unterbrochenen Außenflansch (34) aufweist,
und daß jeder Außenflanschabschnitt (34) eines Innenrahmens (22) in eine Ausnehmung (33) eines benachbarten Innenrahmens (22) eingreift.

5. Taschenfilter nach Anspruch 4,
**dadurch gekennzeichnet, daß** an jedem Innenrahmen (22) jedem Außenflanschabschnitt (34) des einen Längsprofils (23,24) eine Ausnehmung (33) des anderen Längsprofils (24,23) gegenüberliegt.

6. Taschenfilter nach Anspruch 4 oder 5,
**dadurch gekennzeichnet, daß** eine Unterseite (57) jedes Außenflansches (34) als Anschlag für den freien Rand (21) der zugehörigen Filtertasche (20) dient.

7. Taschenfilter nach einem der Ansprüche 1 bis 6,
**dadurch gekennzeichnet, daß** jedes Längsprofil (23,24) des Innenrahmens (22) an einer Auslaßseite des Innenrahmens (22) einen sich nach innen erstreckenden Innenflansch (56) aufweist.

8. Taschenfilter nach einem der Ansprüche 1 bis 7,
**dadurch gekennzeichnet, daß** sich jede Halterippe (18,19) von ihrem Schenkel (16,17) unter einem spitzen Winkel zu ihrem Schenkel (16,17) in Richtung der Basiswand (13) erstreckt.

9. Taschenfilter nach einem der Ansprüche 1 bis 8,
**dadurch gekennzeichnet, daß** in einem Abstand (39) von dem freien Ende jeder Halterippe (18,19) in dem Innenraum (12) wenigstens eine Gegenfläche (40) des Profils (4 bis 7) angeordnet ist,
und daß in einem durch den Abstand (39) definierten Zwischenraum (41) der freie Rand (21) wenigstens einer der Filtertaschen (20) und ein zugehöriges äußeres Längsprofil (36) oder Stirnprofil (25;26) des Innenrahmens (22) untergebracht sind.

10. Taschenfilter nach einem der Ansprüche 1 bis 9,
**dadurch gekennzeichnet, daß** jeweils das an dem Basisprofil (6) und an dem Schließprofil (7) des Außenrahmens (2) angeordnete Filterelement (3) ein dem Basisprofil (6) oder dem Schließprofil (7) zugewandtes äußeres Längsprofil (36) aufweist,
daß jedes äußere Längsprofil (36) eine Höhe (37) aufweist. die größer als ein lichter Abstand (38) zwischen den Halterippen (18,19) des Basisprofils (6) und des Schließprofils (7) ist,
daß einerseits das eine äußere Längsprofil (36) mit dem daran außen fixierten freien Rand (21) der zugehörigen Filtertasche (20) gegen äußere Schrägflächen (42,43) der Halterippen (18,19) des Basisprofils (6) und andererseits äußere Schrägflächen (42,43) der Halterippen (18,19) des Schließprofils (7) gegen das andere äußere Längsprofil (36) mit dem daran fixierten freien Rand (21) der zugehörigen Filtertasche (20) derart preßbar sind, daß die Halterippen (18,19) jeweils elastisch nach außen schwenkbar und wieder in ihre Ausgangslage rückstellbar sind, sobald sich das äußere Längsprofil (36) in einem Zwischenraum (41) des Basisprofils (6) oder des Schließprofils (7) befindet.

11. Taschenfilter nach Anspruch 10,
**dadurch gekennzeichnet, daß** eine Schulter (54) jeder Querwand (30) mit freien Enden der Halterippen (18,19) positionierend und zur Verriegelung des Filterelements (3) zusammenwirkt.

12. Taschenfilter nach Anspruch 10 oder 11,
**dadurch gekennzeichnet, daß** eine Wand (55) der Filtertasche (20) zwischen freien Enden des Innenflansches (56) und der gegenüberliegenden Halterippe (19) schikanenartig geführt und komprimiert ist.

13. Taschenfilter nach einem der Ansprüche 1 bis 12,
**dadurch gekennzeichnet, daß** der freie Rand (21) jeder Filtertasche (20) mit einer Außenfläche des zugehörigen Innenrahmens (22) verklebt ist.

14. Taschenfilter nach einem der Ansprüche 7 bis 13,
**dadurch gekennzeichnet, daß** die Filtertasche (20) sowohl mit dem Innenflansch (56) als auch mit dem gegenüberliegenden Schenkel (16) und seiner Halterippe (19) verklebt ist.

15. Taschenfilter nach einem der Ansprüche 1 bis 14,
**dadurch gekennzeichnet, daß** jedes Stirnprofil (25,26) und zumindest die in den Zwischenraum (41) der Schenkelprofile (4 bis 7) des Außenrahmens (2) eintauchenden Bereiche der Längsprofile (23,24,36) jedes Innenrahmens (22) eine Höhe (63) aufweisen, die etwas kleiner als der lichte Abstand (38) zwischen den Halterippen (18,19) der Schenkelprofile (4,5) des Außenrahmens (2) ist.

16. Taschenfilter nach Anspruch 15,
**dadurch gekennzeichnet, daß** der freie Rand (21) jeder Filtertasche (20) durch die beiden Stirnprofile (25,26) des Innenrahmens (22) an die wenigstens eine Gegenfläche (40,40) der beiden Schenkelprofile (4,5) des Außenrahmens (2) angedrückt ist.

17. Taschenfilter nach Anspruch 16,
**dadurch gekennzeichnet, daß** der freie Rand (21) jeder Filtertasche (20) mit der wenigstens einen Gegenfläche (40,40) verklebt ist.

18. Taschenfilter nach einem der Ansprüche 15 bis 17,
**dadurch gekennzeichnet, daß** eine Wand (55) jeder Filtertasche (20) zwischen Unterkanten (61) der Längsprofile (23,24,36) des Innenrahmens (22) und den gegenüberliegenden Halterippen (19) der Schenkelprofile (4,5) des Außenrahmens (2) schikanenartig geführt und komprimiert ist.

19. Taschenfilter nach Anspruch 18,
**dadurch gekennzeichnet, daß** jede Filtertasche (20) mit dem gegenüberliegenden Schenkel (16) der beiden Schenkelprofile (4,5) und mit dessen Halterippe (19) verklebt ist.

20. Taschenfilter nach einem der Ansprüche 1 bis 19,
**dadurch gekennzeichnet, daß** in dem Innenraum (12) der Profile (4 bis 7) des Außenrahmens (2) jeweils ein Längskanal (14) ausgebildet ist,
daß in den Längskanal (14) jedes Profils (4 bis 7) von jeder Stirnseite des Profils (4 bis 7) eine Zunge (10) eines zugehörigen Eckverbinders (8) einführbar ist,
und daß jede Zunge (10) einen Verriegelungszapfen (11) aufweist, der in eine Verriegelungsöffnung (15) in einer Wand (13) des Längskanals (14) zur formschlüssigen Verriegelung des Eckverbinders (8) mit dem Profil (4 bis 7) einschnappt.

21. Taschenfilter nach Anspruch 20,
**dadurch gekennzeichnet, daß** jede Zunge (10) einen sich von ihrem freien Ende bis über den Verriegelungszapfen (11) hinaus erstreckenden Querschlitz (73) aufweist.

22. Taschenfilter nach Anspruch 20,
**dadurch gekennzeichnet, daß** jede Zunge (10) zu jeder Seite des Verriegelungszapfens (11) einen sich von dem freien Ende der Zunge (10) bis über den Verriegelungszapfen (11) hinaus erstreckenden Längsschlitz (75,76) aufweist,
daß zwischen den Längsschlitzen (75,76) ein den Verriegelungszapfen (11) tragender, federnder Hebel (77) definiert ist,
und daß der Hebel (77) an seiner von dem Verriegelungszapfen (11) abgewandten Seite eine Ausnehmung (78) zur Verringerung seiner Dicke im Vergleich zu der Dicke der Zunge (10) aufweist.

23. Taschenfilter nach einem der Ansprüche 20 bis 22,
**dadurch gekennzeichnet, daß** die Höhe jedes Verriegelungszapfens (11) zu einem Fuß (68) der Zunge (10) hin zunimmt.

24. Taschenfilter nach einem der Ansprüche 20 bis 23,
**dadurch gekennzeichnet, daß** der Längskanal (14) angrenzend an eine Basiswand (13) des Profils (4 bis 7) angeordnet ist,
und daß an einer den Längskanal (14) begrenzenden Zwischenwand (58) Stützwände (60) der Gegenflächen (40) abgestützt sind.

25. Taschenfilter nach einem der Ansprüche 20 bis 23,
**dadurch gekennzeichnet, daß** der Längskanal (14) angrenzend an eine Basiswand (13) des Profils (4 bis 7) angeordnet ist,
daß eine der Basiswand (13) gegenüberliegende Zwischenwand (79) im Querschnitt gewellt ist,
daß ein Wellenberg (80) der Zwischenwand (79) mit einer Ausnehmung (81) freie Enden der benachbarten Vorsprünge (29) aufnimmt,
und daß im Abstand von einander angeordnete Wellentäler (82,83) der Zwischenwand (79) die Gegenflächen (40,40) definieren.

26. Taschenfilter nach einem der Ansprüche 20 bis 25,
**dadurch gekennzeichnet, daß** in den Längskanal (14) der Profile (4 bis 7) die Zungen (10) führende, einander gegenüberliegende Führungsrippen (84,85) der Profile (4 bis 7) hineinragen.

27. Taschenfilter nach einem der Ansprüche 20 bis 26,
**dadurch gekennzeichnet, daß** jede Zunge (10) einen im wesentlichen U-förmigen Querschnitt mit einer Basis (91) und mit von der Basis (91) nach innen ragenden Seitenwänden (86,87) aufweist.

28. Taschenfilter nach Anspruch 27,
**dadurch gekennzeichnet, daß** sich von der Basis (91) jeder Zunge (10) in deren Längsrichtung eine Versteifungsrippe (88) erstreckt.

29. Taschenfilter nach einem der Ansprüche 20 bis 28,
**dadurch gekennzeichnet, daß** sich von jeder Zunge (10) im Abstand von einander angeordnete, an einer Basiswand (13) des Profils (4 bis 7) abstützbare Gleitrippen (89,90) erstrecken.

30. Taschenfilter nach einem der Ansprüche 20 bis 29,
**dadurch gekennzeichnet, daß** der Eckverbinder (8) einen die Zungen (10) tragenden Grundkörper (65) aufweist,
und daß der Grundkörper (65) seitlich zur Anlage an dem zugehörigen Profil (4 bis 7) bestimmte. in Richtung des Profils (4 bis 7) vorspringende Anlagerippen (93,94) aufweist.

31. Taschenfilter nach einem der Ansprüche 1 bis 30,
**dadurch gekennzeichnet, daß** jeder Vorsprung (29) mit dem zugehörigen Loch (28) des benachbarten Innenrahmens (22) eine Preßpassung bildet.

## Claims

1. Pocket filter (1),
having an outer frame (2) made of plastics material and several adjacent filter elements (3) arranged in the outer frame (2),
wherein the outer frame (2) comprises opposing limb profiles (4, 5), a base profile (6) and a closing profile (7) which each have an essentially U-shaped cross section with an inwardly open interior space (12) and can be joined to one another at the corners of the outer frame (2),
wherein each profile (4 to 7) of the outer frame (2) exhibits a base wall (13) and limbs (16, 17) extending from the base wall (13),
wherein a holding rib (18, 19) extends from the free end of each limb (16, 17) into said interior space (12) of the profile (4 to 7) and said holding ribs (18, 19) are spaced at a clear distance (38) from one another,
wherein an inner frame (22) made of plastics material of the accompanying filter element (3) is arranged within a free border (21) of each filter pocket (20),
wherein each inner frame (22) exhibits two opposing longitudinal profiles (23, 24) and two opposing end profiles (25, 26) attached at the ends of the longitudinal profiles (23, 24),
wherein in a transverse plane (27) of each inner frame (22) at least two holes (28) spaced from one another and at least two, outwardly extending, complementary projecting parts (29) are arranged alternately in each longitudinal profile (23, 24), whereby each hole (28) in one longitudinal profile (23, 24) is opposed by a projecting part (29) in the other longitudinal profile (24, 23),
wherein transverse walls (30) fastened on the accompanying longitudinal profile (23, 24) extend into an inlet (31) of the inner frame (22),
wherein each projecting part (29) of the inner frame (22) penetrates the free border (21) of the accompanying filter pocket (20) and the free border (21) of an adjacent filter pocket (20) and engages into the complementary hole (28) of the inner frame (22) belonging to the adjacent filter pocket (20),
and wherein each filter element (3) engages with the free border (21) of its filter pocket (20) in a sealed manner into the interior space (12) of the adjacent profiles (4 to 7) of the outer frame (2),
**characterised in that** one of the transverse walls (30) extends at least approximately in alignment with each hole (28) and each projecting part (29) of the longitudinal profiles (23, 24) of each inner frame (22).

2. Pocket filter in accordance with claim 1,
**characterised in that** each inner frame (22) is designed in one piece.

3. Pocket filter in accordance with claim 1,
**characterised in that** each inner frame (22) is designed in two parts (71,72),
that the transverse walls (30) and the end profiles (25,26) of both parts (71, 72) of the inner frame (22) overlap,
and that the mutually overlapping transverse walls (30) and end profiles (25, 26) are attached to one another respectively in the region of overlap.

4. Pocket filter in accordance with any one of claims 1 to 3,
**characterised in that** each longitudinal profile (23, 24) of the inner frame (22) at an inlet side of the inner frame (22) exhibits an outer flange (34) projecting outwards and periodically interrupted by a notch (33),
and that each outer flange section (34) of an inner frame (22) engages in a notch (33) of an adjacent inner frame (22).

5. Pocket filter in accordance with claim 4,
**characterised in that** on each inner frame (22), each outer flange section (34) of one longitudinal profile (23, 24) is opposed by a notch (33) of the other longitudinal profile (24, 23).

6. Pocket filter in accordance with claim 4 or 5,
**characterised in that** an underside (57) of each outer flange (34) acts as a stop for the free border (21) of the associated filter pocket (20).

7. Pocket filter in accordance with any one of claims 1 to 6,
**characterised in that** each longitudinal profile (23, 24) of the inner frame (22) exhibits an inwardly extending inner flange (56) at an outlet side of the inner frame (22).

8. Pocket filter in accordance with any one of claims 1 to 7,
**characterised in that** each holding rib (18, 19) extends under an acute angle from its limb (16, 17) in the direction of the base wall (13).

9. Pocket filter in accordance with any one of claims 1 to 8,
**characterised in that** at least one opposing surface (40) of the profile (4 to 7) is arranged at a distance (39) from the free end of each holding rib (18, 19) in the interior space (12),
and that the free border (21) of at least one of the filter pockets (20) and an accompanying outer longitudinal profile (36) or end profile (25; 26) of the inner frame (22) are accommodated in an intermediate space (41) defined by the distance (39).

10. Pocket filter in accordance with any one of claims 1 to 9,
**characterised in that** the filter element (3) arranged respectively at the base profile (6) and at the closing profile (7) of the outer frame (2) exhibits an outer longitudinal profile (36) facing the base profile (6) or the closing profile (7),
that each outer longitudinal profile (36) exhibits a height (37) which is greater than a clear distance (38) between the holding ribs (18, 19) of the base profile (6) and the closing profile (7),
that on the one side, the one outer longitudinal profile (36) with the free border (21) of the accompanying filter pocket (20) fixed outwardly thereon can be pressed against the outer oblique surfaces (42, 43) of the holding ribs (18, 19) of the base profile (6), and on the other side, outer oblique surfaces (42, 43) of the holding ribs (18, 19) of the closing profile (7) can be pressed against the other outer longitudinal profile (36) with the free border (21) of the accompanying filter pocket (20) fixed thereon in such a manner that the holding ribs (18, 19) can each be rotated elastically outwards and returned to their starting position, so that the outer longitudinal profile (36) is located in an intermediate space (41) of the base profile (6) or of the closing profile (7).

11. Pocket filter in accordance with claim 10,
**characterised in that** a shoulder (54) of each transverse wall (30) cooperates with free ends of the holding ribs (18, 19) in order to position and lock the filter element (3).

12. Pocket filter in accordance with claim 10 or 11,
**characterised in that** a wall (55) of the filter pocket (20) is guided as if through a chicane and compressed between free ends of the inner flange (56) and the opposing holding rib (19).

13. Pocket filter in accordance with any one of claims 1 to 12,
**characterised in that** the free border (21) of each filter pocket (20) is adhered to an outer surface of the accompanying inner frame (22).

14. Pocket filter in accordance with any one of claims 7 to 13,
**characterised in that** the filter pocket (20) is adhered both to the inner flange (56) and also to the opposing limb (16) and its holding rib (19).

15. Pocket filter in accordance with any one of claims 1 to 14,
**characterised in that** each end profile (25, 26) and at least those regions of the longitudinal profiles (23, 24, 36) of each inner frame (22) which project into the intermediate space (41) of the limb profiles (4 to 7) of the outer frame (2) exhibit a height (63), which is somewhat smaller than the clear distance (38) between the holding ribs (18, 19) of the limb profiles (4, 5) of the outer frame (2).

16. Pocket filter in accordance with claim 15,
**characterised in that** the free border (21) of each filter pocket (20) is pressed by the two end profiles (25, 26) of the inner frame (22) against the at least one opposing surface (40, 40) of the two limb profiles (4, 5) of the outer frame (2).

17. Pocket filter in accordance with claim 16,
**characterised in that** the free border (21) of each filter pocket (20) is adhered to the at least one opposing surface (40, 40).

18. Pocket filter in accordance with any one of claims 15 to 17,
**characterised in that** a wall (55) of each filter pocket (20) is guided as if through a chicane and compressed between lower edges (61) of the longitudinal profiles (23, 24, 36) of the inner frame (22) and the opposing holding ribs (19) of the limb profiles (4, 5) of the outer frame (2).

19. Pocket filter in accordance with claim 18,
**characterised in that** each filter pocket (20) is adhered to the opposing limb (16) of the two limb profiles (4, 5) and adhered to the holding rib (19) of the said limb (16).

20. Pocket filter in accordance with any one of claims 1 to 19,
**characterised in that** a longitudinal channel (14) is formed in the interior space (12) of each of the profiles (4 to 7) of the outer frame (2),
that a tongue (10) of an accompanying comer connector (8) can be introduced from each facing side of the profile (4 to 7) into the longitudinal channel (14) of each profile (4 to 7),
and that each tongue (10) exhibits a locking pin (11) which snaps into a locking aperture (15) in a wall (13) of the longitudinal channel (14) to achieve a form-fit locking of the corner connector (8) and the profile (4 to 7).

21. Pocket filter in accordance with claim 20,
**characterised in that** each tongue (10) exhibits a transverse slot (73) extending from its free end beyond the locking pin (11).

22. Pocket filter in accordance with claim 20,
**characterised in that** each tongue (10) exhibits on each side of the locking pin (11) a longitudinal slot (75, 76) extending from the free end of the tongue (10) to beyond the locking pin (11),
that between the longitudinal slots (75, 76), a resilient lever (77) bearing the locking pin (11) is defined,
and that the lever (77) exhibits a recess (78) in its side facing away from the locking pin (11) for reducing its thickness by comparison with the thickness of the tongue (10).

23. Pocket filter in accordance with any one of claims 20 to 22,
**characterised in that** the height of each locking pin (11) increases towards a foot (68) of the tongue (10).

24. Pocket filter in accordance with any one of claims 20 to 23,
**characterised in that** the longitudinal channel (14) is arranged adjacent to a base wall (13) of the profile (4 to 7),
and that support walls (60) of the opposing surfaces (40) are supported on an intermediate wall (58) which defines the longitudinal channel (14).

25. Pocket filter in accordance with any one of claims 20 to 23,
**characterised in that** the longitudinal channel (14) is arranged adjacent to a base wall (13) of the profile (4 to 7),
that an intermediate wall (79) opposing the base wall (13) is corrugated in cross section,
that a corrugation peak (80) of the intermediate wall (79) accommodates free ends of the adjacent projecting parts (29) in a notch (81),
and that corrugation troughs (82, 83) of the intermediate wall (79) interspaced at a distance from one another define the opposing surfaces (40, 40).

26. Pocket filter in accordance with any one of claims 20 to 25,
**characterised in that** opposing guide-ribs (84, 85) of the profiles (4 to 7) which guide the tongues (10) project into the interior space (12) of the profiles (4 to 7).

27. Pocket filter in accordance with any one of claims 20 to 26,
**characterised in that** each tongue (10) exhibits a substantially U-shaped cross section with a base (91) and with side walls (86, 87) projecting inwardly from the base 91.

28. Pocket filter in accordance with claim 27,
**characterised in that** a stiffening rib (88) extends from the base (91) of each tongue (10) in its longitudinal direction.

29. Pocket filter in accordance with any one of claims 20 to 28,
**characterised in that** gliding ribs (89, 90) which are spaced from one another and can be supported on a base wall (13) of the profile (4 to 7) extend from each tongue (10).

30. Pocket filter in accordance with any one of claims 20 to 29,
**characterised in that** the corner connector (8) exhibits a base element (65) which bears the tongues (10),
and that the base element (65) exhibits lateral locating ribs (93, 94) which project in the direction of the profile (4 to 7) and are intended for positioning on the accompanying profile (4 to 7).

31. Pocket filter in accordance with any one of claims 1 to 30,
**characterised in that** each projecting part (29) forms a press-fit with the accompanying hole (28) of the adjacent inner frame (22).

## Revendications

1. Filtre à poches (1)
comprenant un cadre extérieur (2) en matière plastique et plusieurs éléments filtrants (3) disposés l'un à côté de l'autre dans le cadre extérieur (2),
dans lequel le cadre extérieur (2) présente des profilés de branches (4, 5), un profilé de base (6) et un profilé de fermeture (7) qui présentent chacun une section sensiblement en forme de U, avec un espace intérieur (12) qui s'ouvre vers l'intérieur, et qui peuvent être assemblés entre eux aux angles du cadre extérieur (2).
dans lequel chaque profilé (4 à 7) du cadre extérieur (2) présente une paroi de base (13) et des branches (16, 17) partant de la paroi de base (13),
dans lequel une nervure de retenue (18, 19) s'étend à partir de l'extrémité libre de chaque branche (16, 17) en s'engageant dans l'espace intérieur (12) du profilé (4 à 7), et les nervures de retenue (18, 19) sont disposées à une distance libre (38) l'une de l'autre,
dans lequel, à l'intérieur d'un bord libre (21) de chaque poche filtrante (20), est disposé un cadre intérieur (22) en matière plastique de l'élément filtrant (3) correspondant,
dans lequel chaque cadre intérieur (22) présente deux profilés longitudinaux opposés (23, 24) et deux profilés frontaux (25, 26) opposés, fixés aux extrémités des profilés longitudinaux (23, 24),
dans lequel, dans un plan transversal (27) de chaque cadre intérieur (22), deux trous (28) et au moins deux saillies (29) complémentaires, qui s'étendent vers l'extérieur, sont disposés en alternance à distance l'un de l'autre dans chaque profilé longitudinal (23, 24) et, à chaque trou (28) de l'un des profilés longitudinaux (23, 24), fait face une saillie (29) de l'autre profilé longitudinal (24, 23),
dans lequel des parois transversales (30) fixées au profilé longitudinal (23, 24) correspondant s'étendent dans une ouverture d'admission (31) du cadre intérieur (22),
dans lequel chaque saillie (29) du cadre intérieur (22) traverse le bord libre (21) de la poche filtrante correspondante (20), et le bord libre (21) d'une poche filtrante voisine (20), et pénètre dans le trou complémentaire (28) du cadre intérieur (22) qui appartient à la poche filtrante voisine (20).
et dans lequel chaque élément filtrant (3) est monté à joint étanche avec le bord libre (21) de sa poche filtrante (20) et s'engage dans l'espace intérieur (12) des profilés adjacents (4 à 7) du cadre extérieur (2),
**caractérisé en ce qu'**une des parois transversales (30) s'étend au moins approximativement dans l'alignement de chaque trou (28) et de la saillie opposée (29) des profilés longitudinaux (23, 24) de chaque cadre intérieur (22).

2. Filtre à poches selon la revendication 1,
**caractérisé en ce que** chaque cadre intérieur (22) est réalisé en une seule pièce.

3. Filtre à poches selon la revendication 1,
**caractérisé en ce que** chaque cadre intérieur (22) est réalisé en deux pièces,
**en ce que** les parois transversales (30) et les profilés frontaux (25, 26) des deux parties (71, 72) du cadre intérieur (22) se chevauchent,
et **en ce que** les parois transversales (30) et profilés frontaux (25, 26) qui se chevauchent mutuellement sont fixés l'un à l'autre dans la région de chevauchement.

4. Filtre à poches selon une des revendications 1 à 3,
**caractérisé en ce que** chaque profilé longitudinal (23, 24) du cadre intérieur (22) présente, au niveau d'un côté d'admission du cadre intérieur (22), une aile extérieure (34) en saillie vers l'extérieur, qui est périodiquement interrompue par un évidement (33),
et **en ce que** chaque segment d'aile extérieure (34) d'un cadre intérieur (22) s'engage dans un évidement (33) d'un cadre intérieur (22) voisin.

5. Filtre à poches selon la revendication 4,
**caractérisé en ce que**, sur chaque cadre intérieur (22), à chaque segment d'aile extérieure (34) de l'un des profilés longitudinaux (23, 24), fait face un évidement (33) de l'autre profilé longitudinal (24, 23).

6. Filtre à poches selon la revendication 4 ou 5,
**caractérisé en ce qu'**un côté inférieur (57) de chaque aile extérieure (34) sert de butée pour le bord libre (21) de la poche filtrante correspondante (20).

7. Filtre à poches selon une des revendications 1 à 6,
**caractérisé en ce que** chaque profilé longitudinal (23, 24) du cadre intérieur (22) présente, sur un côté d'échappement du cadre intérieur (22), une aile intérieure (56) qui s'étend vers l'intérieur.

8. Filtre à poches selon une des revendications 1 à 7,
**caractérisé en ce que** chaque nervure de retenue (18, 19) s'étend à partir de sa branche (16, 17) en direction de la paroi de base (13) en formant un angle aigu avec sa branche (16, 17).

9. Filtre à poches selon une des revendications 1 à 8,
**caractérisé en ce qu'**à une distance (39) de l'extrémité libre de chaque nervure de retenue (18, 19) est disposée dans l'espace intérieur (12), au moins une surface conjuguée (40) du profilé (4 à 7),
et **en ce que**, dans un espace intermédiaire (41) défini par la distance (39), sont logés le bord libre (21) d'au moins une des poche filtrantes (20) et un profilé longitudinal extérieur (36) ou profilé frontal (25, 26) correspondant du cadre intérieur (22).

10. Filtre à poches selon une des revendications 1 à 9,
**caractérisé en ce que** l'élément filtrant (3) disposé contre le profilé de base (6) et celui disposé contre le profilé de fermeture (7) du cadre extérieur (2) présentent chacun un profilé longitudinal extérieur (36) dirigé vers le profilé de base (6) ou vers le profilé de fermeture (7),
**en ce que** chaque profilé longitudinal extérieur (36) présente une hauteur (37) qui est plus grande qu'une distance libre (38) entre les nervures de retenue (18, 19) du profilé de base (6) et du profilé de fermeture (7),
**en ce que**, d'une part, l'un des profilés longitudinaux extérieurs (36) peut être pressé, avec le bord libre (21) de la poche filtrante (20) correspondante qui y est fixé extérieurement, contre des surfaces obliques extérieures (42, 43) des nervures de retenue (18, 19) du profilé de base (6) et, d'autre part, des surfaces obliques extérieures (42, 43) des nervures de retenue (18, 19) du profilé de fermeture (7) peuvent être pressées contre l'autre profilé longitudinal extérieur (36) avec le bord libre (21) de la poche filtrante (20) correspondante qui y est fixé, de telle manière que les nervures de retenue (18, 19) peuvent être inclinées élastiquement vers l'extérieur et rappelées dans leur position de départ dès que le profilé longitudinal extérieur (36) se trouve dans un espace intermédiaire (41) du profilé de base (6) ou du profilé de fermeture (7).

11. Filtre à poches selon la revendication 10,
**caractérisé en ce qu'**un épaulement (54) de chaque paroi transversale (30) coopère avec les extrémités libres des nervures de retenue (18, 19) en exerçant un effet de positionnement et pour assurer le verrouillage de l'élément filtrant (3).

12. Filtre à poches selon la revendication 10 ou 11,
**caractérisé en ce qu'**une paroi (55) de la poche filtrante (20) est déformée en chicane et comprimée entre des extrémités libres de l'aile intérieure (56) et de la nervure de retenue (19) qui y fait face.

13. Filtre à poches selon une des revendications 1 à 12,
**caractérisé en ce que** le bord libre (21) de chaque poche filtrante (20) est collé à une surface extérieure du cadre intérieur (22) correspondant.

14. Filtre à poches selon une des revendications 7 à 13,
**caractérisé en ce que** la poche filtrante (20) est collée aussi bien à l'aile intérieure (56) qu'à la branche (16) qui y fait face et qu'à sa nervure de retenue (19).

15. Filtre à poches selon une des revendications 1 à 14,
**caractérisé en ce que** chaque profilé frontal (25, 26) et au moins les régions des profilés longitudinaux (23, 24, 36) de chaque cadre intérieur (22) qui plongent dans l'espace intermédiaire (41) des profilés de branches (4 à 7) du cadre extérieur (2) présentent une hauteur (63) qui est un peu plus petite que la distance libre (38) entre les nervures de retenue (18, 19) des profilés de branches (4, 5) du cadre extérieur (2).

16. Filtre à poches selon la revendication 15,
**caractérisé en ce que** le bord libre (21) de chaque poche filtrante (20) est pressé par les deux profilés frontaux (25, 26) du cadre intérieur (22) contre l'au moins une surface conjuguée (40,40) des deux profilés de branches (4, 5) du cadre extérieur (2).

17. Filtre à poches selon la revendication 16,
**caractérisé en ce que** le bord libre (21) de chaque poche filtrante (20) est collé à l'au moins une surface conjuguée (40, 40).

18. Filtre à poches selon une des revendications 15 à 17,
**caractérisé en ce qu'**une paroi (55) de chaque poche filtrante (20) est déformée en chicane et comprimée entre des bords inférieurs (61) des profilés longitudinaux (23, 24, 36) du cadre intérieur (22) et les nervures de retenue (19) des profilés de branches (4, 5) du cadre extérieur (2) qui leur font face.

19. Filtre à poches selon la revendication 18,
**caractérisé en ce que** chaque poche filtrante (20) est collée à la branche (16) des deux profilés de branches (4, 5) qui lui fait face et à la nervure de retenue (19) de cette aile.

20. Filtre à poches selon une des revendications 1 à 19,
**caractérisé en ce qu'**un canal longitudinal (14) est formé dans l'espace intérieur (12) de chacun des profilés (4 à 7) du cadre extérieur (2),
**en ce qu'**une languette (10) d'un raccord d'angle (8) correspondant peut être engagée dans le canal longitudinal (14) de chaque profilé (4 à 7) en partant de chaque coté frontal du profilé (4 à 7),
**en ce que** chaque languette (10) présente un téton de verrouillage (11) qui s'encliquette dans une ouverture de verrouillage (15) formée dans une paroi (13) du canal longitudinal (14) pour assurer le verrouillage par sûreté de forme du raccord d'angle (8) avec le profilé (4 à 7).

21. Filtre à poches selon la revendication 20,
**caractérisé en ce que** chaque languette (10) présente une fente transversale (73) qui s'étend de son extrémité libre jusqu'au-delà du téton de verrouillage (11).

22. Filtre à poches selon la revendication 20,
**caractérisé en ce que** chaque languette (10) présente, de chaque côté du téton de verrouillage (11), une fente longitudinale (75, 76) qui s'étend de l'extrémité libre de la languette (10) jusqu'au-delà du téton de verrouillage (11),
**en ce qu'**un levier élastique (77) qui porte le téton de verrouillage (11) est défini entre les fentes longitudinales (75, 76),
et **en ce que** le levier (77) présente, le long de son côté éloigné du téton de verrouillage (11) un évidement (78) destiné à réduire son épaisseur comparativement à l'épaisseur de la languette (10).

23. Filtre à poches selon une des revendications 20 à 22,
**caractérisé en ce que** la hauteur de chaque téton de verrouillage (11) croît vers un pied (68) de la languette (10).

24. Filtre à poches selon une des revendications 20 à 23,
**caractérisé en ce que** le canal longitudinal (14) est disposé adjacent à une paroi de base (13) du profilé (4 à 7),
et **en ce que** des parois d'appui (60) des surfaces conjuguées (40) sont appuyées contre une paroi intermédiaire (58) qui limite le canal longitudinal (14).

25. Filtre à poches selon une des revendications 20 à 23,
**caractérisé en ce que** le canal longitudinal (14) est disposé adjacent à une paroi de base (13) du profilé (4 à 7),
**en ce qu'**une paroi intermédiaire (79) qui fait face à la paroi de base (13) est ondulée en section transversale,
**en ce qu'**un sommet d'onde (80) de la paroi intermédiaire (79) reçoit les extrémités libres de saillies (29) voisines au moyen d'un évidement (81),
et **en ce que** des creux d'onde (82, 83) de la paroi intermédiaire (79) disposés l'un à coté de l'autre à une certaine distance définissent les surfaces conjuguées (40, 40).

26. Filtre à poches selon une des revendications 20 à 25,
**caractérisé en ce que** les nervures de guidage (84, 85) opposées face à face des profilés (4 à 7), qui guident les languettes (10) font saillie dans le canal longitudinal (14) des profilés (4 à 7).

27. Filtre à poches selon une des revendications 20 à 26,
**caractérisé en ce que** chaque languette (10) présente une section transversale sensiblement en forme de U comprenant une base (91) et des parois latérales (86, 87) qui font saillie sur la base (91) vers l'intérieur.

28. Filtre à poches selon la revendication 27,
**caractérisé en ce qu'**une nervure de raidissement (88) s'étend à partir de la base (91) de chaque languette (10) dans la direction longitudinale de celle-ci.

29. Filtre à poches selon une des revendications 20 à 28,
**caractérisé en ce qu'**à partir de chaque languette (10), s'étendent des nervures de glissement (89, 90) disposées à une certaine distance l'une de l'autre, qui peuvent prendre appui sur une paroi de base (13) du profilé (4 à 7).

30. Filtre à poches selon une des revendications 20 à 29,
**caractérisé en ce que** le raccord d'angle (8) présente un corps de base (65) qui porte les languettes (10),
et **en ce que** le corps de base (65) présente latéralement des nervures d'appui (93, 94) destinées à s'appuyer contre le profilé (4 à 7) correspondant, et qui font saillie en direction du profilé (4 à 7).

31. Filtre à poches selon une des revendications 1 à 30,
**caractérisé en ce que** chaque saillie (29) forme un ajustement à force avec le trou correspondant (28) du cadre intérieur (22) voisin.
